# EUROPÄISCHE PATENTANMELDUNG

(11) **EP 1 524 460 A1**
(43) Veröffentlichungstag der Anmeldung: **20.04.2005**
(21) Anmeldenummer: 04023442.9
(22) Anmeldetag: 01.10.2004
(51) Int. Cl.: F16J 15/34

(54) **Gleitringdichtung**

(30) Priorität: 08.10.2003 DE 10347264
(71) Anmelder: Carl Freudenberg KG, 69469 Weinheim (DE)
(72) Erfinder: Nakano, Kenji, 69469 Weinheim (DE); Gramlich, Martin, 69221 Dossenheim (DE); Wagner, Günter, 69483 Wald-Michelbach (DE)

(57) **Zusammenfassung**

Gleitringdichtichtung, umfassend einen Gleitring (1) und einen Gegenring (2), die einander mit Dichtflächen (3, 4) relativ verdrehbar und mit axialer Vorspannung federkraftbeaufschlagt dichtend berühren, wobei der Gleitring (1) in axialer Richtung elastisch nachgiebig mittels einer Feder (5) in einem im Wesentlichen topfförmigen Gehäuse (6) abgestützt ist, wobei der Gleitring (1) und die Feder (5) verliersicher in dem Gehäuse (6) angeordnet sind und mit dem Gehäuse (6) eine vormontierbare Einheit (7) bilden und wobei das Gehäuse (6) zumindest eine sich in axialer Richtung erstreckende Haltkralle (8) aufweist, die verliersicher sowie während der bestimmungsgemäßen Verwendung der Gleitringdichtung in radialer und axialer Richtung im Wesentlichen oberflächenbündig, in axialer Richtung relativ hin- und herbeweglich, in einer im Wesentlichen kongruent gestalteten Ausnehmung (9) des Gleitrings (1) angeordnet ist.

## Beschreibung

### Technisches Gebiet

Die Erfindung betrifft eine Gleitringdichtung.

### Stand der Technik

Gleitringichtungen sind allgemein bekannt und gelangen beispielsweise zur Abdichtung von Klimakompressoren zur Anwendung. Eine Gleitringdichtung umfasst dabei einen Gleitring und einen Gegenring, die einander mit Dichtflächen relativ verdrehbar und mit axialer Vorspannung federkraftbeaufschlagt dichtend berühren. Der Gleitring ist in axialer Richtung elastisch nachgiebig mittels einer Feder, beispielsweise einer Schraubendruckfeder, gegenüber einem Gehäuse abgestützt.

### Darstellung der Erfindung

Der Erfindung liegt die Aufgabe zugrunde, eine Gleitringdichtung der vorbekannten Art derart weiterzuentwickeln, dass die Montage der Gleitringdichtung vereinfacht wird und dass Schwingungen im Bereich der Dichtflächen auf ein Minimum reduziert werden und die Gleitringdichtung dadurch ein besseres Abdichtungsergebnis während einer längeren Gebrauchsdauer, unabhängig von der Drehzahl der Gleitringdichtung, aufweist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine Gleitringdichtung vorgesehen, umfassend einen Gleitring und einen Gegenring, die einander mit Dichtflächen relativ verdrehbar und mit axialer Vorspannung federkraftbeaufschlagt dichtend berühren, wobei der Gleitring in axialer Richtung elastisch nachgiebig mittels einer Feder in einem im Wesentlichen topfförmigen Gehäuse abgestützt ist, wobei der Gleitring und die Feder verliersicher in dem Gehäuse angeordnet sind und mit dem Gehäuse eine vormontierbare Einheit bilden und wobei das Gehäuse zumindest eine sich in axialer Richtung erstreckende Haltekralle aufweist, die verliersicher sowie während der bestimmungsgemäßen Verwendung der Gleitringdichtung in radialer und axialer Richtung im Wesentlichen oberflächenbündig, in axialer Richtung relativ hin- und herbeweglich in einer im Wesentlichen kongruent gestalteten Ausnehmung des Gleitrings angeordnet ist. Bei einer derart gestalteten Gleitringdichtung ist die vormontierbare Einheit von besonderem Vorteil. Durch die vormontierbare Einheit wird einerseits bewirkt, dass zumindest der Gleitring, die Feder und das Gehäuse als Einheit vormontiert werden können. Das Handling bei der Montage der Gleitringdichtung ist durch die Reduzierung der zu montierenden Einzelteile wesentlich vereinfacht. Andererseits wird durch die Haltekralle, deren Ausgestaltung und Anordnung in der Ausnehmung des Gleitrings die Entstehung unerwünschter Schwingungen verhindert. Durch die in radialer und axialer Richtung im Wesentlichen oberflächenbündige Anordnung der Haltekralle in der entsprechend gestalteten Ausnehmung des Gleitrings, wird eine besonders strömungsgünstige Form der vormontierbaren Einheit erreicht. Während der bestimmungsgemäßen Verwendung der Gleitringdichtung und Rotation des Gleitrings zusammen mit der abzudichtenden Welle und zwangsläufigem Eintauchen der vormontierbaren Einheit in das abzudichtende Medium, werden durch die Vermeidung überstehender Bestandteile der Haltekralle unerwünschte Schwingungen beim Eintauchen der Haltekralle in das abzudichtende Medium vermieden; die Gleitringdichtung läuft besonders schwingungsarm und leise. Die Gleitflächen von Gleitring und Gegenring liegen deshalb zuverlässig ohne Verkantungen plan aneinander an. Die erfindungsgemäße Gleitringdichtung weist besonders gute Abdichtungseigenschaften auf.
Durch die Vermeidung unerwünschter Schwingungen wird auch das Betriebsgeräusch der Gleitringdichtung während ihrer bestimmungsgemäßen Verwendung reduziert, was für manche Anwendungsfälle, beispielsweise die Verwendung der erfindungsgemäßen Gleitringdichtung in einem Klimakompressor eines Kraftfahrzeugs, von hervorzuhebendem Vorteil ist.

Die relative Hin- und Herbeweglichkeit in axialer Richtung muß trotz der formschlüssigen Verbindung zwischen Gleitring und Gehäuse gegeben sein. Während der bestimmungsgemäßen Verwendung der Gleitringdichtung treten Wärmedehnungen der gegeneinander abzudichtenden Maschinenelemente auf, die durch die federkraftbeaufschlagte Hin- und Herbeweglichkeit ausgeglichen werden, so dass die axiale Vorspannung, mit der die Dichtflächen von Gleitring und Gegenring einander berühren, im Wesentlichen stets konstant ist.

Die oberflächenbündige Anordnung der Haltekralle in der Ausnehmung hat außerdem den Vorteil, dass durch die strömungsgünstige Form beispielsweise ein Aufschäumen des abzudichtenden Mediums beim Eintauchen der Haltekralle zuverlässig ausgeschlossen ist.

Nach einer vorteilhaften Ausgestaltung kann es vorgesehen sein, dass die Haltekralle eine Außenumfangsfläche aufweist, mit einem Krümmungsradius, der dem Krümmungsradius des Außenumfangs der in Umfangsrichtung beiderseits an die Außnehmung angrenzenden Oberflächen des Gleitrings entspricht. Die Oberfläche der vormontierbaren Einheit ist durch eine solche Ausgestaltung besonders strömungsgünstig. Dadurch, dass die Oberfläche der vormontierbaren Einheit frei von sprunghaften Richtungsänderungen ist, wird beim Eintauchen in das abzudichtende Medium ein Aufschäumen des abzudichtenden Mediums minimiert. Außerdem wird die Anlagerung von Schwebeteilchen aus dem abzudichtenden Medium an der vormontierbaren Einheit durch die glatte Oberfläche verhindert.

Die Haltekralle kann eine dem Gegenring axial zugewandte freie Stirnseite aufweisen, die als Rastnocke ausgebildet ist, sich quer zur Längsrichtung der Gleitringdichtung erstreckt und, im herstellungsbedingten Zustand der vormontierbaren Einheit, durch die Feder federkraftbeaufschlagt an einen hinterschnittartigen Rastvorsprung des Gleitrings anlegbar sein. Ein derartiger Rastnocken, der an den Rastvorsprung anlegbar ist und im angelegten Zustand die vormontierbare Einheit mit all ihren Bestandteilen zusammenhält, ist in fertigungstechnischer und wirtschaftlicher Hinsicht einfach und kostengünstig herstellbar. Der Rastnocken kann hinter dem Rastvorsprung einschnappbar sein. Im herstellungsbedingten Zustand der Gleitringdichtung sind der Rastnocken und der Rastvorsprung demgegenüber nicht in Eingriff sondern mit axialem Abstand zueinander benachbart angeordnet, um die elastische Hinund Herbeweglichkeit in axialer Richtung zwischen dem Gehäuse und dem Gleitring mittels der Feder zu ermöglichen.

Zum Schutz der dem Gehäuse zugewandten Stirnseite des Gleitrings vor unerwünscht hohen, mechanischen, beispielsweise punktuellen Belastungen, kann es vorgesehen sein, dass die einander axial zugewandten Oberflächen von Gleitring und Feder mittels eines kreisringförmigen Druckrings aufeinander abgestützt sind. Der Druckring liegt dabei flächig auf der dem Gehäuse zugewandten Stirnseite des Gleitrings auf und bewirkt dadurch eine gleichmäßige Flächenpressung des spröden Materials, aus dem der Gleitring besteht. Die Feder ist in einem solchen Ausführungsbeispiel axial zwischen dem Druckring und dem Gehäuse abgestützt.

Der Gleitring kann radial innenseitig auf der dem Gegenring axial abgewandten Seite eine radial nach innen offene Ausnehmung aufweisen, in der ein O-Ring angeordnet ist, wobei der O-Ring während der bestimmungsgemäßen Verwendung der Gleitringdichtung die abzudichtenden Oberfläche einer abzudichtenden Welle dichtend umschließt. Der O-Ring bildet eine statische Dichtung. Die Ausnehmung für den O-Ring ist radial außenseitig durch einen Nutgrund begrenzt und auf der dem Gegenring axial zugewandten Seite durch eine erste Begrenzungswand, wobei der Nutgrund und die erste Begrenzungswand Bestandteile des Gleitrings sind. Die zweite Begrenzungswand ist bevorzugt Bestandteil des Druckrings. Die Herstellung einer im Wesentlichen L-förmigen Ausnehmung im Gleitring, wobei die Ausnehmung radial nach innen und axial in Richtung der axial benachbarten Stirnseite offen ist, ist herstellungstechnisch einfacher zu realisieren, als eine Nut, die vollständig durch den Gleitring begrenzt ist.

Der Druckring und/oder der O-Ring können Bestandteile der vormontierbaren Einheit bilden. Bevorzugt sind der Druckring und der O-Ring Bestandteile der vormontierbaren Einheit. Je mehr Einzelteile die vormontierbare Einheit umfasst, desto einfacher lässt sich die gesamte Gleitringdichtung montieren. Montagefehler sind dadurch auf ein Minimum begrenzt.

Im Hinblick auf die Abdichtung aggressiver Medien hat es sich als vorteilhaft bewährt, wenn die zur Anwendung gelangenden Bauteile, die aus metallischen Werkstoffen bestehen, aus Edelstahl bestehen. Edelstahl ist rostfrei und gegen die meisten abzudichtenden Medien beständig. Die vorteilhaften Gebrauchseigenschaften der Gleitringdichtung bleiben daher während einer langen Gebrauchsdauer konstant gut.
Auch der Druckring besteht bevorzugt aus einem Edelstahl.

Der Gleitring besteht bevorzugt aus Siliciumcarbid, ebenso wie der Gegenring. Siliciumcarbid weist hervorragende Eigenschaften insbesondere sehr hohe Härte- und Verschleißbeständigkeit, hohe Wärmeleitfähigkeit, gute Thermoschockbeständigkeit und gute Korrosionsbeständigkeit auf. Diese Eigenschaften sind insbesondere im Pumpenbau von hervorzuhebendem Vorteil.

Eine vereinfachte Montage der vormontierbaren Einheit sowie ein weiter verbesserter Zusammenhalt können dadurch erzielt werden, dass das Gehäuse zumindest zwei Haltekrallen aufweist, die gleichmäßig in Umfangsrichtung verteilt angeordnet sind. Einer verkanteten Zuordnung der Bestandteile der vormontierbaren Einheit wird dadurch vorgebeugt.

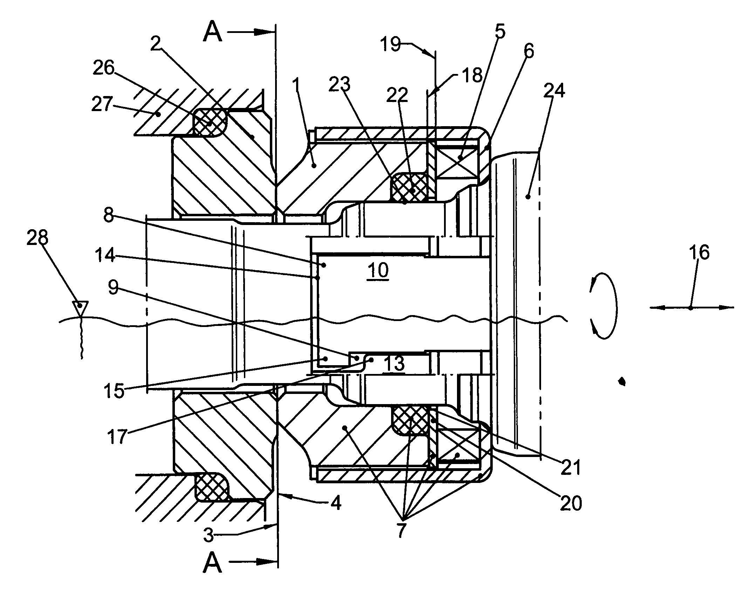

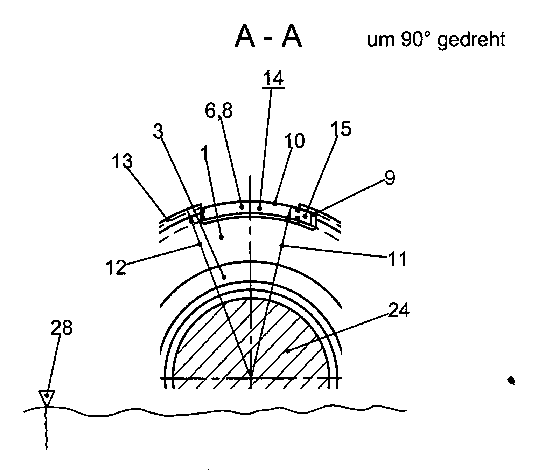

### Kurzbeschreibung der Zeichnung

Ein Ausführungsbeispiel der erfindungsgemäßen Gleitringdichtung wird nachfolgend anhand der Figur näher erläutert.

In der Figur ist ein Ausführungsbeispiel der erfindungsgemäßen Gleitringdichtung in schematischer Darstellung gezeigt.

Die Gleitringdichtung umfasst einen Gleitring 1 und einen Gegenring 2, die jeweils aus Siliciumcarbid bestehen und Dichtflächen 3, 4 aufweisen, die einander unter elastischer Vorspannung dichtend berühren.

Der Gegenring 2 ist mittels des zweiten O-Rings 26 dichtend und ortsfest innerhalb eines Gehäusevorsprungs 27 angeordnet. Die abzudichtende Welle 24 wird vom Gegenring 2 mit radialem Abstand umschlossen.

Der Gleitring 1 bildet einen Bestandteil einer vormontierbaren Einheit 7, die in diesem Ausführungsbeispiel neben dem Gleitring 1 außerdem die Feder 5, den Druckring 20 und den ersten O-Ring 22 umfasst.

Der Gleitring 1 ist in dem hier gezeigten Ausführungsbeispiel mittels des Druckrings 20 und der Feder 5 innerhalb des Gehäuses 6, in axialer Richtung hin- und herbeweglich angeordnet, wobei die Bestandteile 1, 20, 22 und 5 der vormontierbaren Einheit 7 einander durch die Haltekrallen 8, 25 des Gehäuses 6 verliersicher zugeordnet sind.

Die Haltekrallen 8, 25 bildet einen einstückigen Bestandteil des Gehäuses 6 und erstreckt sich in axialer Richtung, wobei die Haltekrallen 8, 25 in radialer und axialer Richtung jeweils im Wesentlichen oberflächenbündig in einer im Wesentlichen kongruent gestalteten Ausnehmung 9 des Gleitrings 1 angeordnet ist.

Die Haltekrallen 8, 25 sind durch die in radialer und axialer Richtung im Wesentlichen oberflächenbündige Einbettung innerhalb der jeweiligen Ausnehmung 9 in strömungstechnischer und schwingungstechnischer Hinsicht besonders vorteilhaft. Die Haltekrallen 8, 25 werden durch ihre Einbettung in der Ausnehmung 9 stabilisiert, so dass Schwingungen der Haltekrallen 8, 25 und/oder ein Aufschäumen des abzudichtenden Mediums, dessen Pegel mit 28 bezeichnet ist, auf ein Minimum reduziert sind. Der Krümmungsradius 11 der Außenfläche 10 der Haltekrallen 8, 25 entspricht jeweils dem Krümmungsradius 12 des Außenumfangs 13 des Gleitrings 1.

Die Verliersicherung der vormontierbaren Einheit 7 wird einerseits durch die Rastnocke 15 gebildet, die sich quer zur Längsrichtung 16 der Gleitringdichtung erstreckt und auf der dem Gegenring 2 axial zugewandten freien Stirnseite 14 der Haltekralle 8 angeordnet ist. Im herstellungsbedingten Zustand der vormontierbaren Einheit 7 ist der Rastnocken 15 durch die Feder 5 federkraftbeaufschlagt an den hinterschnittartigen Rastvorsprung 17 des Gleitrings 1 angelegt und hält die vormontierbare Einheit 7 zusammen. Im hier dargestellten, herstellungsbedingten Zustand der Gleitringdichtung ist die Feder 5 demgegenüber komprimiert und eine axiale Hin- und Herbeweglichkeit des Gleitrings 1 gegenüber dem Gehäuse 6 gegeben.

Im hier dargestellten Ausführungsbeispiel weist das Gehäuse 6 zwei gleichmäßig in Umfangsrichtung verteilte Haltekrallen 8, 25 auf, wobei Haltekralle 25 entsprechend Haltekralle 8 ausgebildet und um 180° versetzt zu dieser angeordnet ist.

Die Feder 5 bewirkt eine Anpressung der Dichtflächen 3, 4 an einander unter elastischer axialer Vorspannung.

## Patentansprüche

1. Gleitringdichtichtung, umfassend einen Gleitring (1) und einen Gegenring (2), die einander mit Dichtflächen (3, 4) relativ verdrehbar und mit axialer Vorspannung federkraftbeaufschlagt dichtend berühren, wobei der Gleitring (1) in axialer Richtung elastisch nachgiebig mittels einer Feder (5) in einem im Wesentlichen topfförmigen Gehäuse (6) abgestützt ist, wobei der Gleitring (1) und die Feder (5) verliersicher in dem Gehäuse (6) angeordnet sind und mit dem Gehäuse (6) eine vormontierbare Einheit (7) bilden und wobei das Gehäuse (6) zumindest eine sich in axialer Richtung erstreckende Haltkralle (8) aufweist, die verliersicher sowie während der bestimmungsgemäßen Verwendung der Gleitringdichtung in radialer und axialer Richtung im Wesentlichen oberflächenbündig, in axialer Richtung relativ hin- und herbeweglich, in einer im Wesentlichen kongruent gestalteten Ausnehmung (9) des Gleitrings (1) angeordnet ist.

2. Gleitringdichtung nach Anspruch 1, **dadurch gekennzeichnet, dass** die Haltekralle (8) eine Außenumfangsfläche (10) aufweist, mit einem Krümmungsradius (11), der dem Krümmungsradius (12) des Außenumfangs (13) der in Umfangsrichtung beiderseits an die Ausnehmung (9) angrenzenden Oberflächen des Gleitrings (1) entspricht.

3. Gleitringdichtung nach einem der Ansprüche 1 oder 2, **dadurch gekennzeichnet, dass** die Haltekralle (8) eine dem Gegenring (2) axial zugewandte freie Stirnseite (14) aufweist, die als Rastnocke (15) ausgebildet ist, sich quer zur Längsrichtung (16) der Gleitringdichtung erstreckt und, im herstellungsbedingten Zustand der vormontierbaren Einheit (7), durch die Feder (5) federkraftbeaufschlagt an einen hinterschnittartigen Rastvorsprung (17) des Gleitrings (1) anlegbar ist.

4. Gleitringdichtung nach einem der Ansprüche 1 bis 3, **dadurch gekennzeichnet, dass** die einander axial zugewandten Oberflächen (18, 19) von Gleitring (1) und Feder (5) mittels eines kreisringförmigen Druckrings (20) aufeinander abgestützt sind.

5. Gleitringdichtung nach einem der Ansprüche 1 bis 4, **dadurch gekennzeichnet, dass** der Gleitring (1) radial innenseitig, auf der dem Gegenring (2) axial abgewandten Seite, eine radial nach innen offene Ausnehmung (21) aufweist, in der ein O-Ring (22) angeordnet ist und dass der O-Ring (22) während der bestimmungsgemäßen Verwendung der Gleitringdichtung die abzudichtende Oberfläche (23) einer abzudichtenden Welle (24) dichtend umschließt.

6. Gleitringdichtung nach einem der Ansprüche 4 oder 5, **dadurch gekennzeichnet, dass** der Druckring (20) und/oder der O-Ring (22) Bestandteile der vormontierbaren Einheit (7) sind.

7. Gleitringdichtung nach einem der Ansprüche 1 bis 6, **dadurch gekennzeichnet, dass** das Gehäuse (6) aus einem Edelstahl besteht.

8. Gleitringdichtung nach einem der Ansprüche 1 bis 7, **dadurch gekennzeichnet, dass** der Gleitring (1) und der Gegenring (2) aus Siliciumcarbid oder Kohle bestehen.

9. Gleitringdichtung nach einem der Ansprüche 1 bis 8, **dadurch gekennzeichnet, dass** das Gehäuse (6) zumindest zwei Haltekrallen (8, 25) aufweist.

10. Gleitringdichtung nach Anspruch 9, **dadurch gekennzeichnet, dass** die Haltekrallen (8, 25) gleichmäßig in Umfangsrichtung verteilt angeordnet sind.
